Europäisches Patentamt

European Patent Office

Office européen des brevets

(11) Publication number: **0 027 448**
**B1**

(12) **EUROPEAN PATENT SPECIFICATION**

(45) Date of publication of patent specification: **07.08.85**

(21) Application number: **80900535.8**

(22) Date of filing: **08.02.80**

(86) International application number:
**PCT/US80/00191**

(87) International publication number:
**WO 80/02088 02.10.80 Gazette 80/22**

(51) Int. Cl.⁴: **H 02 K 23/26,** H 02 K 23/04,
H 02 K 23/54

(54) **ELECTROMECHANICAL MACHINE.**

(30) Priority: **21.03.79 US 22422**

(43) Date of publication of application:
**29.04.81 Bulletin 81/17**

(45) Publication of the grant of the patent:
**07.08.85 Bulletin 85/32**

(84) Designated Contracting States:
**AT CH DE FR GB NL SE**

(56) References cited:
DE-A-2 423 665
GB-A-1 299 057
GB-A-1 310 155
GB-A-1 470 176
GB-A-1 500 943
GB-A-2 001 206
US-A- 271 928
US-A-2 847 589
US-A-3 096 455
US-A-3 293 466
US-A-3 308 322
US-A-3 315 106
US-A-3 678 314

(73) Proprietor: **RUSH, David H.**
**3901 North 29th Avenue**
**Hollywood, FL 33020 (US)**

(72) Inventor: **HAHN, James H.**
**1420 N.E. 41st Street**
**Fort Lauderdale, FL 33334 (US)**

(74) Representative: **Patentanwälte Dipl.-Ing. A.**
**Grünecker, Dr.-Ing. H. Kinkeldey, Dr.-Ing. W.**
**Stockmair,**
**Dr. rer. nat. K. Schumann, Dipl.-Ing. P. Jakob, Dr.**
**rer. nat. G. Bezold Maximilianstrasse 58**
**D-8000 München 22 (DE)**

Courier Press, Leamington Spa, England.

## Description

The present invention relates to an electromechanical machine according to the generic clause of the main claim.

An electromechanical machine is known in accordance with the prior art portion of claim 1 (GB—A—2 001 206) in which the pole arc sector occupies generally the same area as the coil arc sector. Hence, the changing magnetic flux linked to the coil causes induction in the coils when these are shorted upon alignment with the stator poles. Consequently, an EMF is induced in the coil which causes undesired electrical sparks between the brushes and the commutator elements of the commutator, which is fixedly secured to the rotor in order to be rotatably connected with it.

The GB—A—1 299 057 discloses an electromechanical machine using coils with an arc sector smaller than the pole arc sector. This reference proposes the use of a great number of poles compared with the number of coils so as to minimise the harmonics of the fundamental attraction/repulsion-wave form or to improve the generation of harmonics for increasing the electromotive force and the average-torque generated in operation. A first drawback of this electromechanical machine consists in that the coils of the winding arrangement (shown in Figure 5) are connected by means of wires, which are relatively long when compared with the size of the coils. These long connecting wires worsen the efficiency of the machine. A second drawback of this machine consists in that all coils are located in one plane, so that the angular difference between one coil facing a magnet element and the next coil, which will be facing the same magnetic element later, is relatively great. This arrangement is not adapted for achieving a good efficiency.

DE—A—2 423 665 discloses an electromechanical machine in which the disc-type electrical member is stationary and in which the magnetic members are rotatable.

The invention as claimed is intended to provide a remedy. It solves the problem of how to design an electromechanical machine in accordance with the prior art portion of claim 1 in which the efficiency of the machine should be high and in which there is no induction of EMF in the coils while the current direction is changed. Furthermore, for achieving the above high efficiency of the machine, the coil and winding arrangement should be adapted to a very efficient use of the space between the magnet means.

The above technical problem is solved by a machine in accordance with the generic clause of the main claim, the machine having the features of the characterising part of the main claim.

A first important advantage offered by the invention is that the inventive winding arrangement makes it possible to achieve very close spacing of the coils without any overlap of coils, thereby achieving very efficient use of space, the minimum size gap and therefore a high magnet flux density in the air gap causing a high power/weight-ratio of the electromechanical machine.

Another advantage offered by the invention consists in that there is no change of the flux linkage to the coil and no induced EMF in the coil while the period of time that the coil is entirely aligned with the influence of a particular magnet. Between the time the coil enters the magnets influence and the time it begins leaving it, the current direction is changed, but the coil is shortened.

Because the magnet arc sector is greater than the coil arc sector, and because the magnet flux density is constant while the current direction is changed, it is possible to shorten the coil by means of a brush without introducing destructive electric sparks.

Brief Description of the Drawings:

The foregoing and other objects and features of the present invention will be more clearly understood from the following detailed description thereof when read in conjunction with the accompanying drawings in which:

Fig. 1 is an axial cross-sectional view of an electromechanical machine according to the invention;

Fig. 2 illustrates one face of an 8 pole, 24 coil disc rotor wound according to the invention with the coils of the other face shown in phantom lines; and

Fig. 3 is a schematic diagram of a commutator arranged for use with the disc rotor illustrated in Fig. 2.

Description of the Preferred Embodiment:

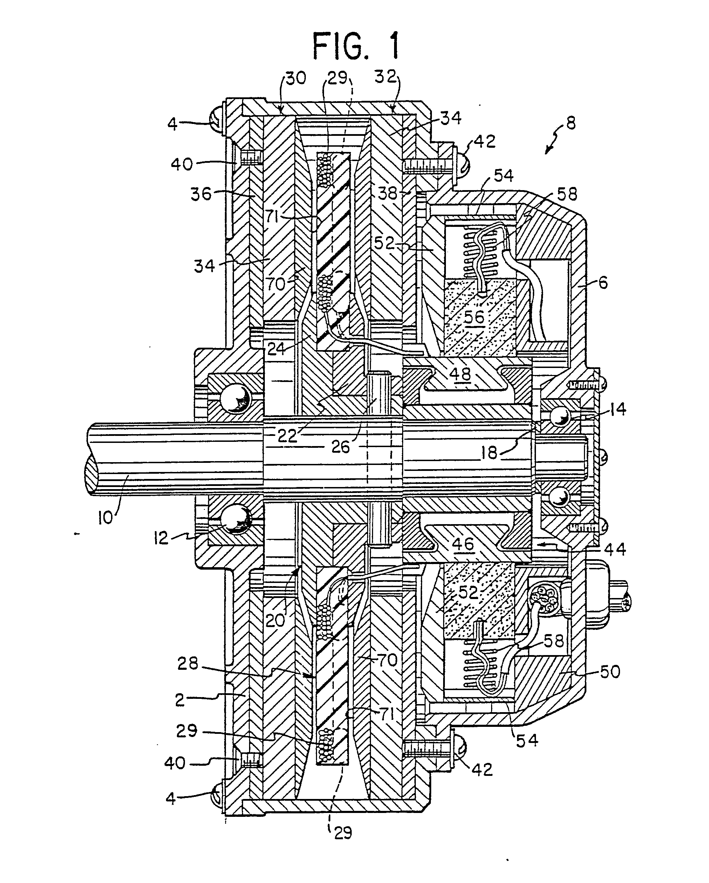

Turning now to Fig. 1, there is illustrated a cross-sectional view of an electromechanical machine utilizing a coreless disc-type armature. A housing-half 2 is connected by any conventional means, for example screws, one of which is indicated at 4, to another housing-half 6 to form the machine housing indicated generally at 8. Rotatably mounted within the housing 8 by means of front bearings 12 and rear bearings 14 is a shaft 10. A washer 18 is positioned between the shaft 10 and the rear bearing. Within the housing 8 and mounted about the shaft 10 is an armature hub indicated generally at 20 which includes hub-half 22 and hub-half 24. The hub halves 22 and 24 are connected to one another and to the shaft so as to rotate therewith, as by a roll pin 26 passing through the two hub halves and the shaft 10. Suitably secured between the two hub halves 22 and 24 to rotate therewith is a disc-shaped rotor 28 made of a non-conducting, non-magnetic material such as, for example, a phenolic. Secured to the rotor 28 as by adhesive or the like are a plurality of conducting wires forming armature coils 29, which will be more fully discussed below.

Fixedly connected to the machine housing 8 are first and second stator members, indicated at 30 and 32, which are arranged parallel and spaced apart by a narrow gap. Each of the stator members 30 and 32 includes a plurality of flat pie-segmented permanent magnets, indicated at 34, which may, for example, be constructed of relatively inexpensive and lightweight ceramic ferrite. Each of the permanent magnets 34 is magnetized through thickness, so one face is of one polarity and the other face of opposite polarity. The magnets may be fixedly secured by means of an elastic cement, for example, to a metal backing plate in the form of a ring made of soft iron or steel, the two back-ups rings being indicated at 36 and 38 respectively. The two back-up rings are fixedly connected to the housing 8 by any conventional means, for example, by countersunk screws, indicated at 40 and 42, respectively. Alternatively, the stators may be formed of ceramic ferrite discs, suitably magnetized at salient areas to form the field poles.

The stator arrangement permits the use of a large number of magnets, for example 6, 8, 10 or more. Due to the necessary separation between adjacent pole faces, slightly less total magnetic area results with a greater number of poles. The greater number of poles provides a greater safety factor against the demagnetizing effect of the armature field.

In the preferred example, the stator pole magnets 34 are made of ceramic ferrite permanent magnets, since the higher strength alnico or rare earth magnets are very expensive and subject to shortages in supply. The individual poles are in pie-segmented sections so that the pole area is maximized. On each ceramic magnet pole face is cemented a flat, soft iron or steel face piece 70 having at its inward face the same shape and area as the ceramic magnet face to which it is mated, but being at its outward face 71 tapered to approximately 40 to 50% of the area though of matching width in a circumferential sense as the underlying ceramic magnet section. This arrangement permits concentration of the magnetic flux to near-saturation and reduction of the corresponding rotor diameter without loss in e.m.f., which results in less windage, shorter wire length per coil, and, accordingly, less resistance and an increase in power and efficiency.

It is also possible to utilize a continuous ring of ceramic ferrite, magnetizing adjacent sections in alternate polarity, thereby further increasing the magnetic area. However, this is less desirable since such a continuous ceramic ferrite structure is frangible and subject to breakage, even when adhered by means of an elastic glue to the magnetic back-up ring. Individual pie-segmented pole pieces are preferred since there is little reduction in total pole area and substantial reduction in the likelihood of breakage. Furthermore, windage losses are reduced substantially with such an arrangement, and consequently better efficiency is obtained.

Fixedly connected to the shaft 10 in Fig. 1 and rotating therewith is a commutator indicated generally at 44. The commutator 44 includes a plurality of segments or bars of a conductive material, such as copper, suitably isolated from one another by, for example, mica. The commutator is also electrically isolated from the armature shaft 10 on which it is mounted. Two of the copper bars of the commutator are indicated at 46 and 48. Fixed to the rear housing 6 is a brush holder mount 50 to which is attached a brush holder 52 and a brush holder clip 54. A brush 56 is positioned between the brush holder 52 and the brush holder clip 54 and is maintained in electrical contact with the commutator bar 46 by a spring 58 positioned between the brush 56 and the brush holder clip 54. Other brushes, as needed, are similarly mounted in relation to the commutator.

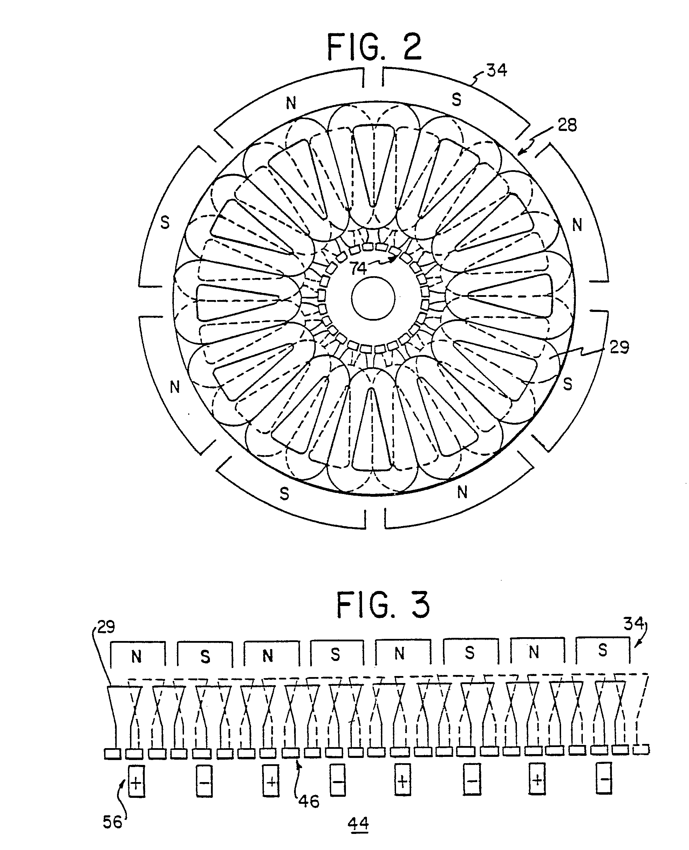

Turning now to Fig. 2, the winding pattern for one side of an 8 pole, 24 coil disc rotor is illustrated in relation to the poles 34 of the stator member 32, with the coils of the other side shown in dashed lines. The coils 29 are arrayed in equal arc intervals, 12 coils on each face of the disc rotor 28, and are each wound in random multiple layers to achieve a compact, high density winding for a given rotor size and gap thickness. The winding and overall assembly are thus greatly simplified and, consequently, more durable and reliable. By using fine wire, a great number of turns may be wound in each coil, and a large number of coils may be wound on the rotor faces, for example 18, 24, 30 or more, for higher voltage windings and greater efficiency. For higher power machines, thicker wire may be used with a slightly larger air gap without an offsetting loss in magnetic flux strength.

It will be understood that the coils on one rotor face are angularly offset from the coils of the other rotor face. In the preferred embodiment, they are offset by one half pitch of the coil arc interval. All coils of the rotor winding are wound in the same direction and are connected to a corresponding number of terminals 74 in head-to-tail fashion alternatingly from one side of the rotor then the other, as shown in Fig. 2. by this arrangement, an even wave winding and smooth torque characteristics may be achieved.

In the invention there are more coils on each rotor face than poles on each stator member. Thus, if each stator member has P poles, where P is an even number greater than 1, then the rotor has an array of C coils on each face or 2C coils total where C is any number, odd or even, greater than P. Each coil arc sector area is therefore smaller than each pole area, and each coil, when shorted upon alignment with the stator poles, thus lies within the pole area such that any induction in the coil is prevented. This results in an absence of arcing at the brushes, longer component life, the possibility of operating the machine at high speeds, and, therefore, high efficiency. Further advantages are realized in the connection of the coils with the commutator, as explained further herein.

In the preferred form of the invention, the total number of coils 2C is a multiple of the number P of poles. The described embodiment of Fig. 1 and 2 illustratively has 8 stator poles and 24 coils arrayed on both sides of the rotor. In smaller machines for example, 6 stator poles may be used with 18 rotor coils (9 on each side). For larger traction motors, 10 or 12 stator poles may be used with 30 or 36 coils on the rotor (15 or 18 on each side). The multiple number of total coils to poles results in an even wave winding and smooth torque characteristics.

In this preferred embodiment, all coils have the same number of turns. This is not essential and the coils may have different numbers of turns, although it is preferable that each pair of diametrically opposite coils on the same rotor face should have the same number of turns. Preferably, the wire used for winding has a thermoplastic or resin coating, for example epoxy, such that the turns can be fused together in a unified body. Additionally, the wound coils may be enclosed by a further layer to produce a durable, integrated winding structure. This arrangement also permits the armature coils to pass very close to the stator magnet surfaces on both sides of the rotor disc thus allowing a greater density of copper winding in the stator gap, with the resultant increase in horsepower for a given size and corresponding increase in efficiency. The described coreless armature rotor is lightweight and utilizes no iron or ferrite materials, such that there are virtually no armature reaction when used in servo or reversible motors, hysteresis effects, eddy losses, or necessity for advancing the commutator brushes under load conditions. Furthermore, the resultant machine may be operated at high rotational speeds for greater horsepower and efficiency.

Turning now to Fig. 3, there is illustrated a schematic diagram of a commutator 44 for use with the armature rotor such as illustrated in Figs. 1 and 2. The commutator has a number of segments or bars 46 corresponding to the total number of coils, in the described embodiment 24 segments. The segments 46 are connected to the corresponding coils 29 in head-to-tail fashion as described previously. In Fig. 3 the coils 29 in solid line represent coils on the rotor face of Fig. 2, and those in broken line correspond to coils on the rear face shown in phantom in Fig. 2. The coils 29 are further shown in relation to the stator poles 34 and to the commutator brushes 56, here 8 in number corresponding to the number of stator poles. The arrangement serves to maintain 8 parallel conducting paths among the coils and to short the coils as they are moved through positions of alignment with the stator poles. This is a simplified construction of high efficiency. It will be understood further that in the invention use of 2C commutator segments with P brushes ensures that a minimum of two segment spacings will separate each pair of full voltage brush contact points. The possibility of shorting and ring fire due to fragments or particles between segments is thus significantly reduced. Instead of 8 brushes used in the described embodiment, a lesser even number of brushes may be used in light-duty machines in conjunction with bridging corresponding commutator segments with an appropriate series of jumper connections. The jumper connections preferably are in the form of stamped brass rings with insulation cemented to one side and tabs to contact appropriate segments. Such rings may be conveniently pressed in place in order to simplify assembly of the machine.

The present invention thus provides a compact, light-weight, high-efficiency electromechanical machine which may be used in a wide range of applications. Such machines can operate at three or more times the speed of laminated armature motors and at 1/8 to 1/10 the weight. Due to high ratio of horsepower to weight and the small amount of costly materials required, these machines are also very economical and easy to assemble and produce. Efficiencies of 75 to 80% in smaller machines, and of 85 to 90% and as high as 93% in larger machines, depending on size and speed, are attainable. Furthermore, the elimination of induction in shorted coils and the spacing between commutator brushes ensure very long brush life even for operation at high speeds. Also, the same machine may serve either as a motor or a generator, and may be arranged to employ a drum rather than disc-type rotor, although this is not the preferred form of practicing the invention.

It will be understood that the foregoing description of the preferred embodiment of the present invention is for purposes of illustration only, and that the various structural and operational features as herein disclosed are susceptible to a number of modifications and changes none of which entail any departure from the spirit and scope of the present invention as defined in the appended claims.

**Claims**

1. Electro mechanical machine comprising:
first and second magnetic members (34) spaced apart to form a gap therebetween, even having a circular array of P magnetic poles of alternately opposite polarity, P being an even integer, each pole of each magnetic member (34) occupying a substantially equal pole arc sector of the circular array and being aligned opposite an opposite-polarity pole of the other magnetic member, an electrical member (28) between the magnetic members having a non-overlapping, circular array of C coils (29) on each of the front and back face thereof, the coil array on one electrical member face being angularly offset relative to the coil array on the other electrical member face, each coil of each electrical member face occupying a substantially equal coil arc sector, said magnetic members and said electrical member being mounted for relative rotation, and a commutator (44) mounted so as to be non-rotatable with respect to the electrical member, characterized in that each coil arc sector is smaller than each pole arc sector, C being an integer greater than P and that the commutator has 2C segments, the coils (29) of the electrical member faces being connected, in head-to-tail fashion with successive coils being on alternate faces of the electrical member and the connections between successive coils being each connected to a respective commutator segment.

2. Machine according to claim 1 characterised in that each coil is connected between two consective commutator segments.

3. Machine according to claim 1, characterised in that C is an integer such that 2C is a multiple of P.

4. Machine according to claim 1, characterised by electrical contact means (56) in conjunction with the commutator (44), for maintaining P parallel conducting pathways among the 2c coils (29) and for shorting P coils upon rotation into positions of alignment with the poles of the stator members.

5. Machine according to claim 4, characterised in that the electrical contact means (56) include P brushes (56).

6. Machine according to claim 1, characterised by electrical contact means (56) including brushes (56) arranged in relation to the 2C commutator segments such that a minimum of two spacings between commutator segments is between adjacent brushes (56).

7. Machine according to claim 1, characterised in that the coils (29) are each wound with wire in the same direction in random multiple layers.

8. Machine according to claim 7, characterised in that the wire is coated with a thermoplastic or resin material and each coil (29) is fused into a unified body (28).

9. Machine according to claim 1, characterised in that the coil arrays on the rotor faces are enclosed in a protective layer of thermoplastic or resin material.

10. Machine according to claim 1, characterised in that the magnetic members (34) are flat, circular and spaced apart parallel to each other, each member including a backing plate (36) and the array of magnetic poles being provided by a corresponding plurality of permanent magnets arranged in a circular array on the backing plate (36), each of the magnets (34) occupying a pie-segmented arc sector area with a relatively small separation between it and adjacent magnets, and that the electrical member (28) is a disc in the gap between the spaced apart parallel magnetic members.

11. Machine according to claim 10, characterised in that each of the array pie-segmented magnets is a ceramic ferrite permanent magnet (34) having on an outward face thereof a soft iron or steel face piece (70) facing the coils (29) on the electrical member (28).

12. Machine according to claim 11, characterised in that said face piece (70) is tapered such that its area facing the coils (29) is smaller than the arc sector area but its width in a circumferential sense matches that of the underlying magnet (34).

13. Machine according to one of claims 4—6, characterised in that said electrical contact means (56) comprises:

2C conductive and electrically isolated commutator segments spaced in a subsequently circular arrangement on said commutator (44), each of said coils (29) being connected in a series between a pair of adjacent commutator segments, P brushes (56) positioned in spaced arrangement so as to contact each of said commutator segments in turn during operation of the machine, each of said brushes (56) being dimensioned to be larger than the spacing between adjacent commutator segments, each of said brushes (56) being positioned with respect to a corresponding pole so that the pair of commutator segments corresponding to a single coil (29) are shortcircuited by said brush (56) as said coil (29) comes into a position of alignement with respect to the corresponding pole, said brushes (56) being adapted to be connected to alternatingly opposite polarities of a source of power, said coils (29) being shortcircuited by a brush (56) as they come into alignement with the corresponding pole and being in series circuit between adjacent brushes (56), the circuits between adjacent brushes (56) forming the P parallel conducting pathways.

**Patentansprüche**

1. Elektromechanische Maschine mit folgenden Merkmalen:

ersten und zweiten magnetischen Gliedern (34), die voneinander be abstandet sind, um zwischen ihnen einen Spalt festzulegen, von denen jedes ein kreisförmiges Feld mit P magnetischen Polen von abwechselnd entgegengesetzter Polarität hat, wobei P eine gerade ganze Zahl ist, wobei jeder Pol eines jeden magnetischen Gliedes (34) einen in wesentlichen gleichen Polbogensektor des kreisförmigen Feldes einnimmt und gegenüber einem Pol des anderen magnetischen Gliedes mit entgegengesetzter Polarität angeordnet ist, einem elektrischen Glied (28), das zwischen den magnetischen Gliedern liegt, mit einem nicht-überlappenden, kreisförmigen Feld von C Wicklungen (29) sowohl an dessen Vorderseite wie auch an dessen Rückseite, wobei das Wicklungsfeld auf einer Seite des elektrischen Gliedes winkelmäßig gegenüber dem Wicklungsfeld auf der anderen Seite des elektrischen Gliedes versetzt ist, wobei die Wicklung auf jeder Seite des elektrischen Gliedes einen im wesentlichen gleichen Wicklungsbogensektor einnimmt, wobei die magnetischen Glieder und das elektrische Glied für eine relative Drehung befestigt sind, und einem Kommutator (44), der derart befestigt ist, daß er bezüglich des elektrischen Gliedes nicht drehbar ist, dadurch gekennzeichnet, daß jeder Wicklungsbogensektor kleiner ist als jeder Polbogensektor, daß C eine ganze Zahl ist, die größer ist als P und daß der Kommutator 2C Segmente hat, daß die Wicklungen (29) an den Seiten des elektrischen Gliedes in einer Kopf-zu-Fuß-Art mit folgenden Wicklungen verbunden sind, die auf den jeweils anderen Seiten des elekrischen Gliedes liegen, und daß die Verbindungen zwischen den aufeinander folgenden Wicklungen jeweils mit einem entsprechenden Kommutatorsegment verbunden sind.

2. Maschine nach Anspruch 1, dadurch gekennzeichnet, daß jede Wicklung zwischen zwei aufeinander folgenden Kommutatorsegmenten angeschlossen ist.

3. Maschine nach Anspruch 1, dadurch gekennzeichnet, daß C eine ganze Zahl ist, die derart gewählt ist, daß 2C ein Vielfaches von P ist.

4. Maschine nach Anspruch 1, gekennzeichnet durch eine elektrische Kontakteinrichtung (56) in Verbindung mit dem Kommutator (44) zum Aufrechterhalten von P parallelen leitenden Verbindungen zwischen den 2C Wicklungen (29) und zum Kurzschließen der P Wicklungen bei ihrer Drehung in Lagen, in denen sie mit den Polen der Statorglieder ausgerichtet sind.

5. Maschine nach Anspruch 4, dadurch gekennzeichnet, daß die elektrische Kontakteinrichtung (56) P Bürsten (56) enthält.

6. Maschine nach Anspruch 1, gekennzeichnet durch eine elektrische Kontakteinrichtung (56) mit Bürsten (56), die bezüglich der 2C Kommutatorsegmente derart angeordnet sind, daß wenigstens zwei Abstände zwischen den Kommutatorsegmenten zwischen den benachbarten Bürsten (56) liegen.

7. Maschine nach Anspruch 1, dadurch gekennzeichnet, daß die Wicklungen (29) mit einem Draht in der gleichen Richtung in zufällig verteilten vielfachen Schichten gewickelt sind.

8. Maschine nach Anspruch 7, dadurch gekennzeichnet, daß der Draht mit einem thermoplastischen Kunststoff oder mit einem Kunstharzmaterial ummantelt ist und daß jede Wicklung (29) zu einem gleichförmigen Körper (28) verschmolzen ist.

9. Maschine nach Anspruch 1, dadurch gekennzeichnet, daß die Wicklungsfelder auf den Rotorseiten mit einer Schutzschicht aus thermoplastischem Kunststoff oder Kunstharzmaterial umhüllt sind.

10. Maschine nach Anspruch 1, dadurch gekennzeichnet, daß die magnetischen Glieder (34) flach, kreisförmig und parallel voneinander beabstandet angeordnet sind, daß die Glieder eine Hilfsplatte (36) enthalten, und daß das Feld von magnetischen Polen durch eine entsprechende Mehrzahl von Permanentmagneten gebildet wird, die in einem kreisförmigen Feld auf der Hilfsplatte 36 angeordnet sind, wobei jeder Magnet (34) eine kuchenstückförmige Bogensektorfläche bei einem relativ niedrigen Abstand zwischen diesem Magnet und benachbarten Magneten einnimmt, und daß das elektrische Glied (28) eine in dem Spalt zwischen den parallel voneinander beabstandeten magnetischen Gliedern angeordnete Scheibe ist.

11. Maschine nach Anspruch 10, dadurch gekennzeichnet, daß jedes Feld der kuchenstückförmigen Magnete aus einem keramischen Ferritpermanentmagnet (34) besteht, dessen Außenfläche ein aus Weicheisen oder Stahl bestehendes Außenteil (70) ist, das den Wicklungen (29) des elektrischen Gliedes (28) gegenüber liegt.

12. Maschine nach Anspruch 11, dadurch gekennzeichnet, daß das Außenteil (70) in der Weise zulaufend ausgebildet ist, daß dessen den Wicklungen (29) gegenüber liegender Bereich kleiner ist als die Bogensektorfläche, wobei jedoch dessen Breite in Umfangsrichtung mit derjenigen des darunter liegenden Magneten (34) übereinstimmt.

13. Maschine nach einem der Ansprüche 4 bis 6, dadurch gekennzeichnet, daß die elektrische Kontakteinrichtung (56) folgende Merkmale aufweist:

2C leitende und elektrisch isolierte Kommutatorsegmente, die voneinander in einer im wesentlichen kreisförmigen Anordnung auf dem Kommutator (44) beabstandet sind, wobei jede Wicklung (29) in Reihenschaltung zwischen einem Paar von benachbarten Kommutatorsegmenten angeschlossen ist, P Bürsten (56), die in einer beabstandeten Anordung liegen, um jedes der Kommutatorsegment der Reihe nach während des Betriebs der Maschine zu kontaktieren, wobei jede der Bürsten (56) größer ist als der Abstand zwischen benachbarten Kommutatorsegmenten, wobei jede der Bürsten (56) bezüglich eines entsprechenden Poles derart angeordnet ist, daß das Paar von Kommutatorsegmenten, das einer einzelnen Wicklung (29) entspricht, durch die Bürste (56) kurzgeschlossen wird, wenn die Wicklung (29) in eine Lage kommt, in der sie bezüglich des entsprechenden Poles ausgerichtet ist, wobei die Bürsten (56) dazu geeignet sind, mit abwechselnden, entgegengesetzten Polaritäten einer Leistungsquelle verbunden zu werden, wobei die Wicklungen (29) durch eine Bürste (56) kurzgeschlossen werden, wenn sie mit einem entsprechenden Pol in Ausrichtung kommen, und in Reihenschaltung mit benachbarten Bürsten (56) liegen, wobei die Schaltungen zwischen benachbarten Bürsten (56) P parallele leitende Verbindungen bilden.

**Revendications**

1. Machine électro-mècanique comprenant: un premier et un second éléments magnétiques (34) espacés de façon à former entre eux un intervalle, ayant chacun un agencement circulaire de P poles magnétiques de polarités opposées alternées, P étant un nombre entier pair, chaque pole de chaque élément magnétique (34) occupant un secteur d'arc polaire de l'agencement circulaire à peu près égal et étant aligné en face d'un pole de polarité opposée de l'autre élément magnétique, un élément électrique (28) entre les éléments magnétiques, ayant un agencementcirculaire de C enroulements (29) ne se recouvrant pas, sur chacune des faces avant et arrière de cet élément, l'agencement de l'enroulement sur une face de l'élément électrique étant décalé angulairement par rapport à l'agencement de l'enroulement sur l'autre face de l'élément électrique, chaque enroulement de chaque face de l'élément électrique occupant un secteur d'arc polaire à peu près égal, lesdits éléments magnétiques et ledit élément électrique étant montés à rotation relative, et in collecteur (44) monté de façon non rotative par rapport à l'élément électrique, caractérisé en ce que chaque secteur d'arc d'enroulement est plus petit que chaque secteur d'arc polaire, C étant un nombre entier supérieur à P, et en ce que le collecteur comporte 2C segments, les enroulements (29) des faces de l'élément électriquee étant reliés, dans un mode en tête à queue les enroulements successifs se trouvant sur les faces alternées de l'élément électrique et les connections entre les enroulements successifs étant reliées chacune à un segment respectif du collecteur.

2. Machine suivant la revendication 1, caractérisée en ce que chaque enroulement est relié entre deux segments consécutifs du collecteur.

3. Machine suivant la revendication 1, caractérisée en ce que C est un nombre entier tel que 2C est un multiple de P.

4. Machine suivant la revendication 1, caractérisée par un dispositif de contact électrique (56) en conjugaison avec le collecteur (44) pour maintenir P circuits conducteurs parallèles parmi les 2C enroulements (29) et pour fermer P enroulements à la suite de la rotation dans des positions d'alignement avec les poles des éléments de stator.

5. Machine suivant la revendication 4, caractérisée en ce que le dispositif de contact électrique (56) comprend P balais (56);

6. Machine suivant la revendication 1, caractérisée par un dispositif de contact électrique (56) comprenant des balais (56) disposés par rapport aux 2C segments du collecteur de telle sorte qu'un minimum de deux intervalles entre les segments du collecteur se trouve entre des balais adjacents (56).

7. Machine suivant la revendication 1, caractérisée en ce que les enroulements (29) sont bobinés chacun avec du fil de métal dans le même sens en couches multiples aléatoires.

8. Machine suivant la revendication 7, caractérisée en ce que le fil de métal est revêtu d'une matière thermoplastique ou d'une résine, chaque enroulement (29) étant fondu en un corps unifié (28).

9. Machine suivant la revendication 1, caractérisée en ce que les agencements d'enroulements sur les faces du rotor sont enfermés dans une couche protectrice d'une matière thermoplastique ou d'une résine.

10. Machine suivant la revendication 1, caractérisée en ce que les éléments magnétiques (34) sont plats, circulaires et espacés parallèlement l'un de l'autre, chaque élément comprenant une plaque de support (36) et l'agencement des poles magnétiques étant réalisé par une pluralité correspondante d'aimants permanents disposés suivant un gencement circulaire sur la plaque de support (36), chacun des aimants (34) occupant une aire de secteur d'arc en part de gateau avec une séparation relativement petite entre et les aimants adjacents, et en ce que l'élément électrique (28) est un disque disposé dans l'intervalle entre les éléments magnétiques parallèles espacés.

11. Machine suivant la revendication 10, caractérisée en ce que chacun des agencements d'aimants en part de gateau est un aimant permanent ferrite céramique (34) ayant sur une face externe une pièce de revêtement externe (70) en fer doux ou en acier faisant face aux enroulements (29) sur l'élément électrique (28).

12. Machine suivant le revendication 11, caractérisée en ce que ladite pièce (70) de revêtement est convergente de telle sorte que son aire faisant face aux enroulements (29) soit plus petite que l'aire de secteur d'arc mais que sa largeur dans le sens circonférentiel corresponde à celle de l'aimant (34) sous-jacent.

13. Machine suivant l'un des revendications 4 à 6, caractérisée en ce que ledit dispositif de contact électrique (56) comprend: 2C segments de collecteur conducteurs et électriquement isolés dans un agencement à peu prés circulaire sur ledit collecteur (44), chacun desdits enroulements (29) étant relié en série entre deux segments adjacents du collecteur. P balais (56) disposés espacés de façon à entrer en contact avec chacun desdits segments du collecteur tout à tour lors du fonctionnement de la machine, chacun desdits balais (56) étant dimensionné de façon à être plus grand que l'écartement entre les segments adjacents du collecteur, chacun desdits balais (56) étant positionné par rapport à un pole correspondant de façon que les deux segments du collecteur correspondant à un seul enroulement (29) soient mis en cour-circuit par ledit balai (56) lorsque ledit enroulement (29) parvient dans une position d'alignement par rapport au pole correspondant, lesdits balais (56) étant adaptés pour être reliés à des polarités alternativement opposées d'une source d'énergie, lesdits enroulements (29) étant mis en court-circuit par un balai (56) lorsqu'ils viennent en alignement avec le pole correspondant et étant en circuit série entre des balais adjacents (56), les circuits entre des balais adjacents (56) formant les P circuits conducteurs parallèles.

# FIG. 1

# FIG. 2

# FIG. 3